# EUROPÄISCHE PATENTSCHRIFT

(11) **EP 3 023 201 B1**
(45) Veröffentlichungstag und Bekanntmachung des Hinweises auf die Patenterteilung: **06.09.2017**
(21) Anmeldenummer: 14003913.2
(22) Anmeldetag: 20.11.2014
(51) Int. Cl.: B25F 5/00, B27B 17/00

(54) **Motorsägenanordnung und Seilbaugruppe für eine Motorsäge**
Motorised saw assembly and cable module for a motorised saw
Système de tronçonneuse et composant de câble pour une tronçonneuse

(43) Veröffentlichungstag der Anmeldung: 25.05.2016
(73) Patentinhaber: Andreas Stihl AG & Co. KG, 71336 Waiblingen (DE)
(72) Erfinder: Weinig, Markus, 71364 Winnenden (DE); Mang, Harald, 71364 Winnenden (DE); Lank, Jonas, 71364 Winnenden (DE); Heinzelmann, Georg, 71364 Winnenden (DE); Failenschmid, Martin, 72532 Gomadingen (DE); Frey, Benjamin, 70191 Stuttgart (DE); Jug, Simon, 70734 Fellbach (DE)
(74) Vertreter: Reinhardt, Annette

(56) Entgegenhaltungen:
- EP-B1- 2 033 742
- WO-A1-2013/080233
- DE-U1- 29 808 030
- US-A- 5 394 592
- US-A1- 2007 145 087

## Beschreibung

Die Erfindung betrifft eine Motorsägenanordnung der im Oberbegriff des Anspruchs 1 angegebenen Gattung sowie eine Seilbaugruppe für eine Motorsäge.

Aus der EP 2 033 742 B1 ist eine Motorsägenanordnung bekannt, die eine Motorsäge umfasst. Zur Verbindung der Motorsäge mit einer externen Batterie ist ein Stromkabel vorgesehen.

Insbesondere für das Arbeiten mit Baumpflegesägen sind elastische Sicherungselemente bekannt, die mit einem Ende an einer Trageinrichtung wie einem Traggürtel oder dgl. und mit dem anderen Ende an der Motorsäge festgelegt werden. Beim Klettern im Baum kann der Bediener die Motorsäge an dem Sicherungselement, das auch als Motorsägenstropp bezeichnet wird, nach unten hängen lassen. Das Sicherungselement ist an der Trageinrichtung des Bedieners dabei üblicherweise mit einer Überlastsicherung befestigt. Verhakt sich die Motorsäge im Geäst, so löst sich das Sicherungselement vom Bediener.

Der Erfindung liegt die Aufgabe zugrunde, eine Motorsägenanordnung der gattungsgemäßen Art zu schaffen, die insbesondere beim Arbeiten im Baum ein komfortables Arbeiten und Fortbewegen im Baum ermöglicht. Eine weitere Aufgabe der Erfindung besteht darin, eine Seilbaugruppe für eine Motorsäge anzugeben.

Diese Aufgabe wird bezüglich der Motorsägenanordnung durch eine Motorsägenanordnung mit den Merkmalen des Anspruchs 1 gelöst. Bezüglich der Seilbaugruppe wird die Aufgabe durch eine Seilbaugruppe mit den Merkmalen des Anspruchs 19 gelöst.

Es ist ein elastisches Sicherungselement für die Motorsäge vorgesehen, das mit dem Stromkabel eine Seilbaugruppe bildet. Das Stromkabel ist an einer elektrischen Verbindung mit dem Akku verbunden. Das elastische Sicherungselement ist über eine Verbindungseinrichtung mit einer Überlastsicherung mit dem Benutzer verbunden. Die Überlastsicherung löst die mechanische Verbindung des Sicherungselements mit dem Benutzer bei Überschreiten einer am Sicherungselement wirkenden maximalen Zugkraft. Damit beim Lösen des elastischen Sicherungselements auch die mechanische Verbindung zwischen der Motorsäge und dem Akku über das Stromkabel gelöst wird, ist vorgesehen, dass die Auszugskraft zum Lösen der elektrischen Verbindung des Stromkabels mit dem Akku kleiner als die maximale Zugkraft der Überlastsicherung ist. Wirkt am Sicherungselement eine Kraft, die größer als die maximale Zugkraft der Überlastsicherung ist, so löst sich die mechanische Verbindung zwischen Sicherungselement und dem Bediener. Nach dem Lösen dieser mechanischen Verbindung wirkt die Zugkraft auf die elektrische Verbindung zwischen dem Stromkabel und dem Akku. Dadurch, dass die Auszugskraft zum Lösen der elektrischen Verbindung kleiner als die maximale Zugkraft ist, wird auch die elektrische Verbindung gelöst, so dass der Bediener sich unabhängig von der Motorsäge bewegen kann.

Das Sicherungselement ist dabei in seiner Längsrichtung elastisch, also dehnbar, ausgebildet. Sobald die dehnende Kraft nicht mehr auf das Sicherungselement wirkt, zieht sich das Sicherungselement wieder zusammen, bis es zumindest weitgehend seine Ausgangslänge erreicht hat.

Die Auszugskraft der elektrischen Verbindung beträgt vorteilhaft höchstens die Hälfte, insbesondere höchstens ein Fünftel der maximalen Zugkraft. Dadurch ist ein sicheres Lösen der elektrischen Verbindung nach dem Lösen der mechanischen Verbindung durch die Überlastsicherung sichergestellt.

Um die Behinderung des Bedieners beim Arbeiten mit der Motorsäge durch die Seilbaugruppe möglichst gering zu halten, ist vorgesehen, dass die Seilbaugruppe Mittel zur Verbindung des Stromkabels mit dem Sicherungselement besitzt. Vorteilhaft ist das Stromkabel benachbart zum Befestigungsmittel und/oder benachbart zur Verbindungseinrichtung am Sicherungselement befestigt. Bei einer Befestigung des Stromkabels am Sicherungselement benachbart zur Verbindungseinrichtung wird ferner erreicht, dass die an der Verbindungseinrichtung wirkende Kraft nach dem Überschreiten der maximalen Zugkraft unmittelbar auf die elektrische Verbindung wirkt und so ein sicheres Lösen der elektrischen Verbindung gewährleistet ist.

Um eine gute Anpassung auf den Bediener und den Arbeitseinsatz zu ermöglichen, ist vorteilhaft vorgesehen, dass die Verbindungseinrichtung in mindestens zwei Positionen an der Seilbaugruppe festlegbar ist. Die Verbindungseinrichtung ist hierzu vorteilhaft lösbar an der Seilbaugruppe befestigt. Vorteilhaft weist die Verbindungseinrichtung eine Klemmeinrichtung zur lösbaren Verbindung mit der Seilbaugruppe auf, über die die Verbindungseinrichtung in unterschiedlichen Positionen an der Seilbaugruppe festlegbar ist. Die verstellbare Verbindungseinrichtung kann dabei zusätzlich oder alternativ zu einer an einem Ende des Sicherungselements angeordneten Verbindungseinrichtung vorgesehen sein.

Um ein einfaches Arbeiten zu ermöglichen, ist vorgesehen, dass das Stromkabel über mindestens 50% der Länge des Sicherungselements zwischen dem Befestigungsmittel und der Verbindungseinrichtung mit dem Sicherungselement zumindest lose verbunden ist. Die Verbindung zwischen dem Stromkabel und dem Sicherungselement ist dabei derart gestaltet, dass der Abstand zwischen dem Sicherungselement und dem Stromkabel in jedem Bereich, in dem die lose Verbindung besteht, kleiner als 15 cm ist.

Bevorzugt sind Stromkabel und Sicherungselement über näherungsweise die gesamte Länge des Sicherungselements zwischen Befestigungsmittel und Verbindungseinrichtung zumindest lose miteinander verbunden. Auch eine feste Verbindung des Stromkabels mit dem Sicherungselement kann jedoch vorteilhaft sein. Die Länge des Sicherungselements bezieht sich dabei auf die unbelastete Länge des Sicherungselements. Ein einfacher Auf bau ergibt sich, wenn das Stromkabel in dem Bereich, in dem das Stromkabel mit dem Sicherungselement verbunden ist, um das Sicherungselement gewunden ist. Dadurch wird auf einfache Weise eine Längendehnung der Seilbaugruppe ermöglicht, auch wenn das Stromkabel nicht elastisch ist.

Ein einfacher Aufbau ergibt sich, wenn das Stromkabel in dem Bereich, in dem es mit dem Sicherungselement verbunden ist, innerhalb des Sicherungselements geführt ist. Das Sicherungselement kann dabei das Stromkabel nach Art einer Hülle umgeben. Es kann jedoch auch vorgesehen sein, dass das Stromkabel, insbesondere die einzelnen Adern des Stromkabels, in das Material des Sicherungselements eingebettet sind. Dies ist insbesondere dann vorteilhaft, wenn das Sicherungselement aus Kunststoff besteht und als massiver Körper ausgebildet ist oder wenn das Sicherungselement als mindestens teilweise schlauchförmiges Gewebe ausgebildet ist. Es kann jedoch auch vorgesehen sein, dass die Seilbaugruppe eine Hülle umfasst, in der das Sicherungselement und das Stromkabel über mindestens einen Teilbereich ihrer Länge geführt sind. In der Hülle können die einzelnen Adern des Kabels ohne den umhüllenden Kabelmantel geführt sein. Dadurch wird die Steifigkeit der Anordnung gegenüber einer Anordnung mit Kabelmantel verringert. Vorteilhaft ist die Hülle in ihrer Längsrichtung mindestens teilweise elastisch, so dass Längenänderungen der Seilbaugruppe nicht durch die Hülle behindert werden. Es kann jedoch auch vorgesehen sein, dass die Hülle in Falten gelegt ist oder eine Gewebestruktur aufweist, die Längenänderungen zulässt. Vorteilhaft erstreckt sich die Hülle über mindestens 50%, vorzugsweise mindestens 80%, besonders bevorzugt über näherungsweise den gesamten Bereich der Seilbaugruppe vom Befestigungsmittel bis zur Verbindungseinrichtung.

Zweckmäßig weist die Seilbaugruppe eine Längenbegrenzung zur Begrenzung der maximal gedehnten Länge des Sicherungselements auf. Sobald das Sicherungselement die maximal gedehnte Länge erreicht hat, werden weitere am Sicherungselement wirkende Kräfte nicht mehr zur weiteren Dehnung des Sicherungselements genutzt, sondern wirken unmittelbar auf die Überlastsicherung. Die maximale gedehnte Länge des Sicherungselements beträgt zwischen dem Befestigungsmittel und der Verbindungseinrichtung vorteilhaft mindestens 150%, insbesondere mindestens 160% der unbelasteten Länge des Sicherungselements zwischen dem Befestigungsmittel und der Verbindungseinrichtung. Dadurch kann eine ausreichend große maximal gedehnte Länge des Sicherungselements erreicht werden, und gleichzeitig ist die unbelastete Länge des Sicherungselements vergleichsweise klein, so dass der Bediener beim Arbeiten mit der Motorsäge durch das unbelastete Sicherungselement nicht behindert wird. Die Länge des Stromkabels entspricht vorteilhaft mindestens der maximal gedehnten Länge des Sicherungselements. Dadurch ist eine Beschädigung des Stromkabels durch Überdehnen sicher vermieden.

Das erste Ende des Stromkabels trägt vorteilhaft einen Stecker einer Steckverbindung, der mit einem Gegenstecker des Akkus elektrisch verbunden ist. Die Steckverbindung ist dabei vorteilhaft in einer Auszugsrichtung zu lösen. Um sicherzustellen, dass die am Stromkabel wirkende Auszugskraft in Auszugsrichtung der Steckverbindung wirkt und die Steckverbindung bei der gewünschten Auszugskraft gelöst wird, ist vorteilhaft vorgesehen, dass der Gegenstecker begrenzt beweglich gehalten ist und sich in Richtung der am Stromkabel wirkenden Auszugskraft ausrichten kann. Der Gegenstecker kann dabei insbesondere an einem mit dem Akku verbundenen Stromkabel ausgebildet sein, das am Bediener, beispielsweise an einer Trageinrichtung des Bedieners wie einem Traggürtel oder dgl. beweglich gehalten ist, beispielsweise in einer Stoffschlaufe. Dadurch kann auf einfache Weise erreicht werden, dass die Auszugskraft in Auszugsrichtung der Steckverbindung auf die Steckverbindung wirkt. Um sicherzustellen, dass auf das Stromkabel keine Kräfte wirken, ist vorteilhaft vorgesehen, dass der Stecker fest mit der Längenbegrenzung des Sicherungselements verbunden ist. Es kann vorgesehen sein, dass die Überlastsicherung an der Steckverbindung angeordnet ist, beispielsweise an Gehäuseteilen der Steckverbindung.

Für eine Seilbaugruppe für eine Motorsäge ist vorgesehen, dass die Seilbaugruppe ein elastisches Sicherungselement oder ein Stromkabel umfasst, wobei die Seilbaugruppe mindestens ein Befestigungsmittel besitzt, mit dem das Sicherungselement am Gehäuse einer Motorsäge festlegbar ist, und wobei die Seilbaugruppe mindestens eine Verbindungseinrichtung zur Verbindung mit einem Benutzer aufweist, wobei die Verbindungseinrichtung eine Überlastsicherung besitzt, die die mechanische Verbindung des Sicherungselements mit dem Benutzer bei Überschreiten einer am Sicherungselement wirkenden maximalen Zugkraft löst, und wobei das Stromkabel einen Stecker einer elektrischen Verbindung trägt, wobei die Auszugskraft der elektrischen Verbindung kleiner als die maximale Zugkraft ist.

Die Seilbaugruppe kann beim Arbeiten mit einer Motorsäge an der Motorsäge und am Bediener fixiert werden. Wirkt an der Motorsäge eine Kraft, die größer als die maximal zulässige Zugkraft der Überlastsicherung ist, so löst sich sowohl das Sicherungselement als auch die elektrische Verbindung, so dass die Seilbaugruppe vollständig vom Bediener gelöst ist.

Ausführungsbeispiele der Erfindung werden im Folgenden anhand der Zeichnung erläutert. Es zeigen:
- Fig. 1: eine schematische Darstellung einer Motorsägenanordnung an einem Bediener,
- Fig. 2: eine teilgeschnittene Seitenansicht der Seilbaugruppe der Anordnung aus Fig. 1 in unbelastetem Zustand,
- Fig. 3: eine teilgeschnittene Seitenansicht der Seilbaugruppe aus Fig. 2 in vollständig gedehntem Zustand,
- Fig. 4: eine vergrößerte, teilgeschnittene Darstellung des an der Motorsäge festzulegenden Endbereichs der Seilbaugruppe,
- Fig. 5: eine vergrößerte Darstellung des am Bediener festzulegenden Endbereichs der Seilbaugruppe,
- Fig. 6: eine schematische Darstellung der Verbindungseinrichtung der Seilbaugruppe mit dem Bediener,
- Fig. 7: eine vergrößerte, teilgeschnittene Darstellung des an der Motorsäge festzulegenden Endbereichs der Seilbaugruppe in vollständig gedehntem Zustand,
- Fig. 8: einen Schnitt entlang der Linie VIII-VIII in Fig. 2,
- Fig. 9: eine schematische Schnittdarstellung der elektrischen Verbindung des Stromkabels mit dem Akku,
- Fig. 10: eine Seitenansicht eines Abschnitts eines Ausführungsbeispiels einer Seilbaugruppe in unbelastetem Zustand,
- Fig. 11: die Anordnung aus Fig. 10 in vollständig gedehntem Zustand,
- Fig. 12: eine ausschnittsweise perspektivische Darstellung der Seilbaugruppe aus Fig. 10,
- Fig. 13: eine teilgeschnittene Seitenansicht eines Abschnitts eines Ausführungsbeispiels einer Seilbaugruppe in unbelastetem Zustand,
- Fig. 14: eine teilgeschnittene Seitenansicht der Anordnung aus Fig. 13 in vollständig gedehntem Zustand,
- Fig. 15: eine vergrößerte, teilgeschnittene Darstellung eines Endbereichs der Seilbaugruppe aus Fig. 13 in unbelastetem Zustand,
- Fig. 16: eine vergrößerte, teilgeschnittene Darstellung eines Endbereichs der Seilbaugruppe aus Fig. 13 in vollständig gedehntem Zustand,
- Fig. 17: eine Seitenansicht in Richtung des Pfeils XVII in Fig. 13,
- Fig. 18: eine perspektivische Darstellung eines Endbereichs der Seilbaugruppe,
- Fig. 19: eine teilgeschnittene Seitenansicht eines Abschnitts eines Ausführungsbeispiels einer Seilbaugruppe in unbelastetem Zustand,
- Fig. 20: eine teilgeschnittene Seitenansicht der Anordnung aus Fig. 19 in vollständig gedehntem Zustand,
- Fig. 21: eine vergrößerte, teilgeschnittene Seitenansicht eines Endbereichs der Seilbaugruppe aus Fig. 19 in unbelastetem Zustand,
- Fig. 22: eine vergrößerte, teilgeschnittene Seitenansicht eines Endbereichs der Seilbaugruppe aus Fig. 19 in vollständig gedehntem Zustand,
- Fig. 23: eine Seitenansicht in Richtung des Pfeils XXIII in Fig. 19,
- Fig. 24: eine perspektivische Darstellung eines Endbereichs der Seilbaugruppe aus Fig. 19,
- Fig. 25: ein Ausführungsbeispiel eines Abschnitts einer Seilbaugruppe in Seitenansicht,
- Fig. 26: ein Ende der Seilbaugruppe aus Fig. 25 in vergrößerter Darstellung,
- Fig. 27: eine teilgeschnittene Seitenansicht eines Abschnitts eines Ausführungsbeispiels einer Seilbaugruppe in unbelastetem Zustand,
- Fig. 28: eine teilgeschnittene Seitenansicht der Anordnung aus Fig. 27 in vollständig gedehntem Zustand,
- Fig. 29: einen Schnitt entlang der Linie XXIX-XXIX in Fig. 27,
- Fig. 30: eine perspektivische Darstellung eines Endbereichs der Seilbaugruppe aus Fig. 27,
- Fig. 31: eine schematische Darstellung eines Ausführungsbeispiels einer Motorsägenanordnung an einem Bediener,
- Fig. 32: eine perspektivische Darstellung einer Verbindungseinrichtung der Motorsägenanordnung aus Fig. 31,
- Fig. 33: eine Seitenansicht eines Ausführungsbeispiels des am Bediener festzulegenden Endbereichs einer Seilbaugruppe.

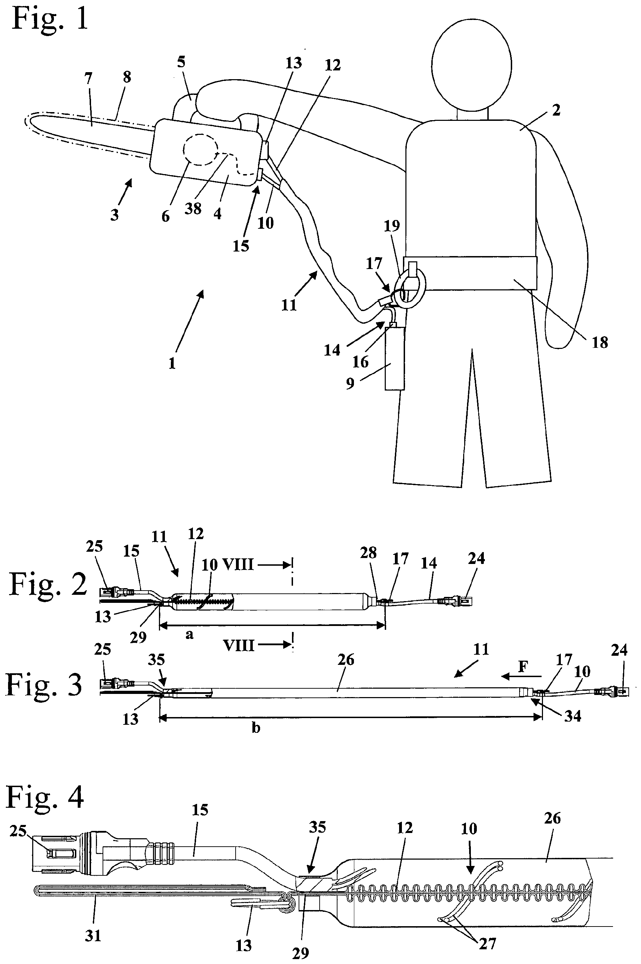

Fig. 1 zeigt als Ausführungsbeispiel eine Motorsägenanordnung 1. Die Motorsägenanordnung 1 umfasst eine Motorsäge 3, eine Seilbaugruppe 11 sowie einen Akku 9. Die Motorsäge 3 besitzt ein Gehäuse 4, an dem ein Handgriff 5 festgelegt ist. Der Handgriff 5 ist als oberer Handgriff ausgebildet. Bei der Motorsäge 3 handelt es sich um eine Baumpflegesäge (auch Top Handle-Säge genannt). In der schematischen Darstellung in Fig. 1 wird die Motorsäge 3 von einem Bediener 2 am oberen Handgriff 5 gehalten. Am Gehäuse 4 ist eine Führungsschiene 7 festgelegt, an der eine Sägekette 8 geführt ist. Die Sägekette 8 ist im Betrieb von einem im Gehäuse 4 angeordneten Antriebsmotor 6 umlaufend um die Führungsschiene 7 angetrieben. Der Antriebsmotor 6 ist als Elektromotor ausgebildet und über ein mit dem Akku 9 verbundenes Stromkabel 10 mit Energie versorgt. Das Stromkabel 10 besitzt ein erstes Ende 14, an dem es über eine elektrische Verbindung 16 mit dem Akku 9 verbunden ist. Die elektrische Verbindung 16 kann unmittelbar an einem Gehäuse des Akkus 9 vorgesehen sein. Es kann jedoch auch vorgesehen sein, dass der Akku 9 über ein Anschlusskabel mit der elektrischen Verbindung 16, die beispielsweise als Steckverbindung ausgebildet sein kann, verbunden ist. Ein zweites Ende 15 des Stromkabels 10 ist am Gehäuse 4 der Motorsäge 3 festgelegt. Hierzu kann beispielsweise ein Anschlussteil einer Steckverbindung, beispielsweise eine Steckdose am Gehäuse 4 der Motorsäge 3 vorgesehen sein. Es kann auch vorgesehen sein, dass am Gehäuse 4 ein Schacht zur Aufnahme eines Akkupacks vorgesehen ist, und dass in den Schacht ein Adapter eingeschoben ist, an dem das zweite Ende 15 des Stromkabels 10 angeschlossen ist. Auch dieser Anschluss kann vorteilhaft über eine Steckverbindung erfolgen. Im Gehäuse 4 ist das zweite Ende 15 des Stromkabels über eine elektrische Verbindung 38 mit dem Antriebsmotor 6 verbunden. Die elektrische Verbindung 38 kann in geeigneter Weise gestaltet sein.

Insbesondere beim Arbeiten im Baum ist es vorteilhaft, die Motorsäge über ein Sicherungselement 12 am Bediener 2 zu befestigen. Das Sicherungselement 12 ist vorteilhaft ein Sicherungsseil. Das Sicherungselement 12 ist vorteilhaft elastisch ausgebildet, so dass das Sicherungselement 12 in seiner Längsrichtung dehnbar ist. Bewegt sich der Bediener 2 im Baum, kann er die Motorsäge 3 am Sicherungselement 12 nach unten hängend transportieren. Dadurch hat der Bediener 2 beide Hände frei und wird durch die Motorsäge 3 in seiner Bewegungsfreiheit nicht eingeschränkt. Das Sicherungselement 12 ist über mindestens ein Befestigungsmittel 13 am Gehäuse 4 der Motorsäge 3 befestigt. Die Befestigungsmittel 13 können beispielsweise einen in eine Öse der Motorsäge 3 eingehakten Ring oder dgl. umfassen. Am Bediener 2 ist das Sicherungselement 12 über eine Verbindungseinrichtung 17 gehalten. Im Ausführungsbeispiel trägt der Bediener 2 einen Traggürtel 18, an dem ein Karabinerhaken 19 festgelegt ist. In den Karabinerhaken 19 ist die Verbindungseinrichtung 17, im Ausführungsbeispiel ein Ring, eingehängt. Ist die Motorsäge 3 beispielsweise am Traggürtel 18 gehalten, so ist das Sicherungselement 12 vergleichsweise kurz. Im Betrieb, wenn der Bediener 2 die Motorsäge 3 hält, kann sich das Sicherungselement 12 längen und ermöglicht dadurch eine hohe Bewegungsfreiheit beim Arbeiten mit der Motorsäge 3. Wird die Motorsäge 3 am Sicherungselement 12 nach unten hängend transportiert, kann sich das Sicherungselement 12 noch weiter längen, insbesondere bis zum Erreichen einer maximalen Länge.

Das Stromkabel 10 und das Sicherungselement 12 bilden eine Seilbaugruppe 11. Dadurch wird die Bedienung vereinfacht. Das Stromkabel 10 und das Sicherungselement 12 sind mindestens teilweise, im Ausführungsbeispiel über einen Großteil ihrer Länge, miteinander verbunden. Dadurch wird eine Behinderung des Bedieners durch die Seilbaugruppe 11 weitgehend vermieden.

Fig. 2 zeigt die Seilbaugruppe 11 in unbelastetem Zustand. Das Sicherungselement 12 besitzt einen ersten Endabschnitt 28, an dem die Verbindungseinrichtung 17 vorgesehen ist, sowie einen zweiten Endabschnitt 29, an dem ein Befestigungsmittel 13, im Ausführungsbeispiel ein Ring, festgelegt ist. Das Sicherungselement 12 besitzt von dem ersten Endabschnitt 28 bis zum zweiten Endabschnitt 29, also von der Verbindungseinrichtung 17 bis zum Befestigungsmittel 13 eine unbelastete Länge a. Die Länge a kann beispielsweise etwa 50 cm bis etwa 1 m betragen.

Fig. 3 zeigt die Seilbaugruppe 11 im vollständig gedehnten Zustand. In diesem Zustand besitzt die Seilbaugruppe 11 zwischen dem Befestigungsmittel 13 und der Verbindungseinrichtung 17 eine Länge b. Die Länge b ist deutlich größer als die Länge a. Die Länge b kann beispielsweise etwa 75 cm bis etwa 1,6 m, insbesondere etwa 90 cm bis etwa 1,4 m betragen. Die Länge b beträgt vorteilhaft mindestens 150%, insbesondere mindestens 160% der unbelasteten Länge a. Wie die Figuren 2 und 3 zeigen, ist am ersten Ende 14 des Stromkabels 10 ein erster Stecker 24 einer Steckverbindung vorgesehen und am zweiten Ende 15 des Stromkabels 10 ein zweiter Stecker 25. Die Stecker 24 und 25 bilden Teile von Steckverbindungen zur Verbindung des Stromkabels 10 mit dem Akku 9 bzw. dem Antriebsmotor 6.

Wie die Figuren 2 und 3 auch zeigen, sind das Stromkabel 10 und das Sicherungselement 12 über näherungsweise die gesamte Länge vom ersten Endabschnitt 28 bis zum zweiten Endabschnitt 29 des Sicherungselements 12 von einer elastischen Hülle 26 umgeben. Die Hülle 26 ist an einem ersten Befestigungsbereich 34 und einem zweiten Befestigungsbereich 35 mit dem Stromkabel 10 und dem Sicherungselement 12 verbunden. Dabei verbindet die Hülle 26 das Sicherungselement 12 und das Stromkabel 10 am ersten Befestigungsbereich 34 und auch am zweiten Befestigungsbereich 35 miteinander.

Wie die vergrößerte Darstellung in Fig. 4 zeigt, besitzt das Stromkabel 10 im Ausführungsbeispiel zwei Adern 27, die innerhalb der Hülle 26 ohne einen zusätzlichen Kabelmantel geführt sind. Die Adern 27 des Stromkabels 10 sind dabei lose um das Sicherungselement 12 gewunden und können am Innenumfang der Hülle 26 anliegen. Die Adern 27 dienen vorteilhaft zur Übertragung von elektrischer Energie. Vorteilhaft sind zwei weitere, nicht gezeigte Adern vorgesehen, die als Signalleitungen dienen und ebenfalls lose um das Sicherungselement 12 gewunden sind. Wie Fig. 4 auch zeigt, weist das Sicherungselement 12 benachbart zum Befestigungsmittel 13 eine Schlaufe 31 auf, die ebenfalls zur Befestigung genutzt werden kann.

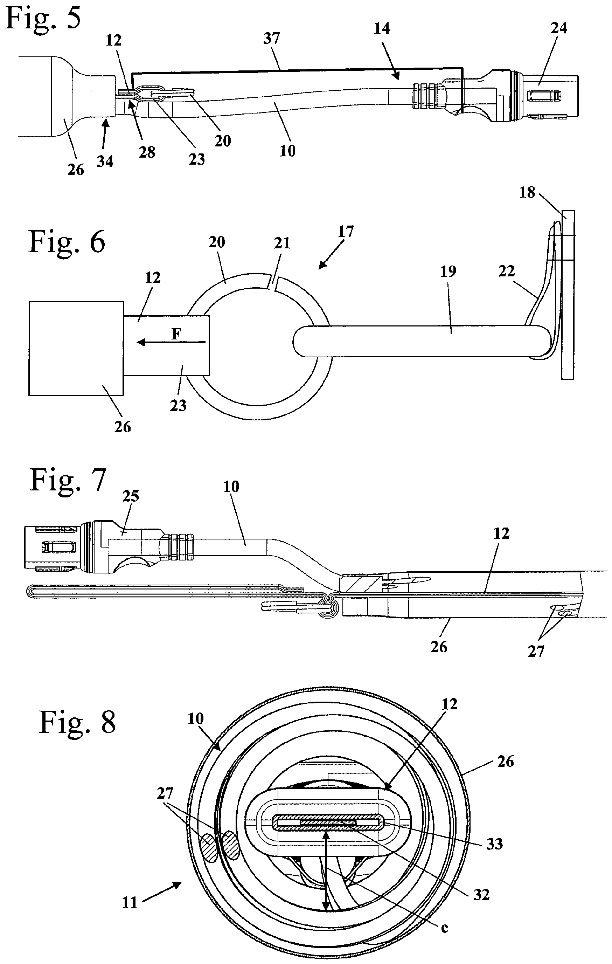

Fig. 5 zeigt den ersten Befestigungsbereich 34 und das erste Ende 14 des Stromkabels 10 in vergrößerter Darstellung. Das Sicherungselement 12 weist an seinem ersten Endabschnitt 28 eine Schlaufe 23 auf, in der ein Überlastring 20 eingehängt ist. Das Sicherungselement 12 ist über eine in Fig. 5 schematisch gezeigte Verbindung 37 mit dem ersten Stecker 24 verbunden. Die Verbindung 37 kann zwar biegbar sein, dehnt sich jedoch bei den im Betrieb am Sicherungselement 12 üblicherweise wirkenden Kräften nicht in Längsrichtung des Stromkabels 10. Eine Längung der Verbindung 37 erfolgt vorteilhaft erst bei Kräften, die oberhalb der Auszugskraft der elektrischen Verbindung 16 liegen. Die Verbindung 37 kann beispielsweise durch einen um die Adern 27 und vorteilhaft um außerdem vorgesehene Signalleitungen angeordneten Kabelmantel gebildet sein.

Fig. 6 zeigt den Überlastring 20 schematisch. Die Enden des Überlastrings 20 sind nicht miteinander verbunden, so dass der Überlastring 20 eine Öffnung 21 besitzt. In der schematischen Darstellung in Fig. 6 erstreckt sich der Überlastring 20 über weniger als einen vollen Kreisumfang. Es kann jedoch auch vorgesehen sein, dass sich der Überlastring 20 über einen Winkel von deutlich mehr als 360° um den Ringmittelpunkt erstreckt und die Enden des Überlastrings 20 überlappend angeordnet sind. Dadurch, dass die Enden des Überlastrings 20 nicht fest miteinander verbunden sind, kann sich der Überlastring 20 unter Krafteinwirkung aufdehnen. Der Überlastring 20 ist im Karabinerhaken 19 eingehängt, der seinerseits über eine Schlaufe 22 fest am Traggürtel 18 gehalten ist. Die Schlaufe 22 kann beispielsweise am Traggürtel 18 festgenäht oder auf sonstige geeignete Weise fest mit dem Traggürtel 18 verbunden sein.

Der Überlastring 20 ist auf eine maximal wirkende Zugkraft ausgelegt. Die maximal wirkende Zugkraft kann beispielsweise etwa 300 N bis etwa 500 N betragen. Übersteigt eine am Sicherungselement 12 wirkende Zugkraft F die maximale Zugkraft des Überlastrings 20, so wird der Überlastring 20 aufgedehnt und die mechanische Verbindung des Sicherungselements 12 mit dem Karabinerhaken 19, also mit dem Bediener 2, wird gelöst. Dies kann beispielsweise dann der Fall sein, wenn der Bediener 2 die Motorsäge 3 an der Seilbaugruppe 11 hängend transportiert und sich die Motorsäge 3 im Baum oder Ästen verhakt oder eingeklemmt wird. Dann löst sich die mechanische Verbindung des Sicherungselements 12 zum Karabinerhaken 19. Die Seilbaugruppe 11 ist über das Stromkabel 10 und die elektrischen Verbindungen an den Enden 14 und 15 des Stromkabels 10 auch nach dem Lösen der Verbindung über das Sicherungsseil 12 noch mit dem Bediener 2 verbunden. Um sicherzustellen, dass die Verbindung über das Stromkabel 10 gelöst wird, ist die Auszugskraft der elektrischen Verbindung 16 auf die maximale Zugkraft des Überlastrings 20 abgestimmt. Die Auszugskraft zum Lösen der elektrischen Verbindung ist dabei kleiner als die maximale Zugkraft. Sobald sich die mechanische Verbindung des Sicherungselements 12 zum Karabinerhaken 19 aufgrund des Überschreitens der maximalen Zugkraft löst, wirkt die maximale Zugkraft auf die elektrische Verbindung 16.

Die Verbindung 37 zwischen dem Sicherungselement 12 und dem ersten Stecker 24 (Fig. 5) stellt dabei sicher, dass die gesamte am Sicherungselement 12 wirkende Zugkraft F unmittelbar am Stecker 24 wirkt und nicht am Stromkabel 10. Die Verbindung 37 kann jedoch auch entfallen. In diesem Fall kann die elektrische Verbindung 16 auch zwischen dem Stromkabel 10 und dem Stecker 24 gelöst werden. Hierzu kann die Auszugskraft, die zum Abziehen des Stromkabels 10 vom Stecker 24 benötigt wird, kleiner als die maximale Zugkraft ausgelegt werden. Sobald sich auch die elektrische Verbindung 16 gelöst hat, ist die Motorsäge 3 vollständig vom Bediener 2 gelöst, und der Bediener 2 kann sich unabhängig von der Motorsäge 3 bewegen.

Die Auszugskraft der elektrischen Verbindung 16 beträgt vorteilhaft höchstens die Hälfte, insbesondere höchstens ein Fünftel der maximalen Zugkraft des Überlastrings 20. Sobald die mechanische Verbindung zwischen Sicherungselement 12 und Karabinerhaken 19 gelöst ist, wirkt dadurch eine Kraft auf die elektrische Verbindung 16, die deutlich größer als deren Auszugskraft ist, so dass die elektrische Verbindung 16 sicher gelöst wird. Die Auszugskraft der elektrischen Verbindung kann beispielsweise 10 N bis 250 N, vorteilhaft 20 N bis 100 N, insbesondere etwa 40 N bis etwa 60 N betragen.

Wie die vergrößerte Darstellung in Fig. 7 zeigt, sind die Adern 27 des Stromkabels 10 auch in vollständig gestrecktem Zustand des Sicherungselements 12, also bei maximaler Länge b des Sicherungselements 12, noch lose um das Sicherungselement 12 gewunden. Die Länge des Stromkabels 10 ist größer als die des Sicherungselements 12.

Die Schnittdarstellung in Fig. 8 zeigt den Aufbau der Seilbaugruppe 11 im Einzelnen. Die Hülle 26 umgibt sowohl das Stromkabel 10 mit seinen beiden Adern 27 als auch das Sicherungselement 12. Das Sicherungselement 12 ist im Ausführungsbeispiel aus zwei Komponenten gebildet, nämlich einem innenliegenden elastischen Band 32, beispielsweise einem Gummiband, sowie einer das elastische Band 32 umgebenden Längenbegrenzung 33. Die Längenbegrenzung 33 kann beispielsweise ein Gewebe oder ein Kunststoffschlauch sein und ist, wie Fig. 4 zeigt, in unbelastetem Zustand der Seilbaugruppe 11 in Falten gelegt. Wie Fig. 7 zeigt, ist die Längenbegrenzung 33 in vollständig gedehntem Zustand des Sicherungselements 12 glatt ausgebildet. Die Anzahl und Größe der Falten bestimmt die mögliche Dehnung. In vollständig ausgezogenem Zustand ist die Längenbegrenzung 33 bei den im Betrieb üblichen Kräften nicht weiter dehnbar und begrenzt dadurch die maximale gedehnte Länge b des Sicherungselements.

Wie Fig. 8 auch zeigt, besitzt das Sicherungselement 12 zum Stromkabel 10 einen vergleichsweise geringen Abstand c. Der Abstand c beträgt vorteilhaft an jeder Stelle der Seilbaugruppe 11 weniger als 15 cm, vorzugsweise weniger als 10 cm. Als besonders bevorzugt hat sich ein Abstand von weniger als 5 cm herausgestellt. Der Außendurchmesser der Seilbaugruppe 11 kann dadurch vergleichsweise klein gewählt werden und beträgt vorzugsweise weniger als 10 cm. Im Ausführungsbeispiel sind das Stromkabel 10 und das Sicherungselement 12 über näherungsweise ihre gesamte Länge miteinander verbunden. Das Sicherungselement 12 erstreckt sich vom Befestigungsmittel 13 bis zur Verbindungseinrichtung 17 vollständig innerhalb der Hülle 26. Die Enden 14 und 15 des Stromkabels 10 ragen mit einem geringen Abschnitt Stromkabel 10 aus der Hülle 26 heraus, um einen einfachen Anschluss der Stecker 24 und 25 an die zugehörigen Gegenstecker der Motorsäge 3 bzw. des Akkus 9 zu ermöglichen.

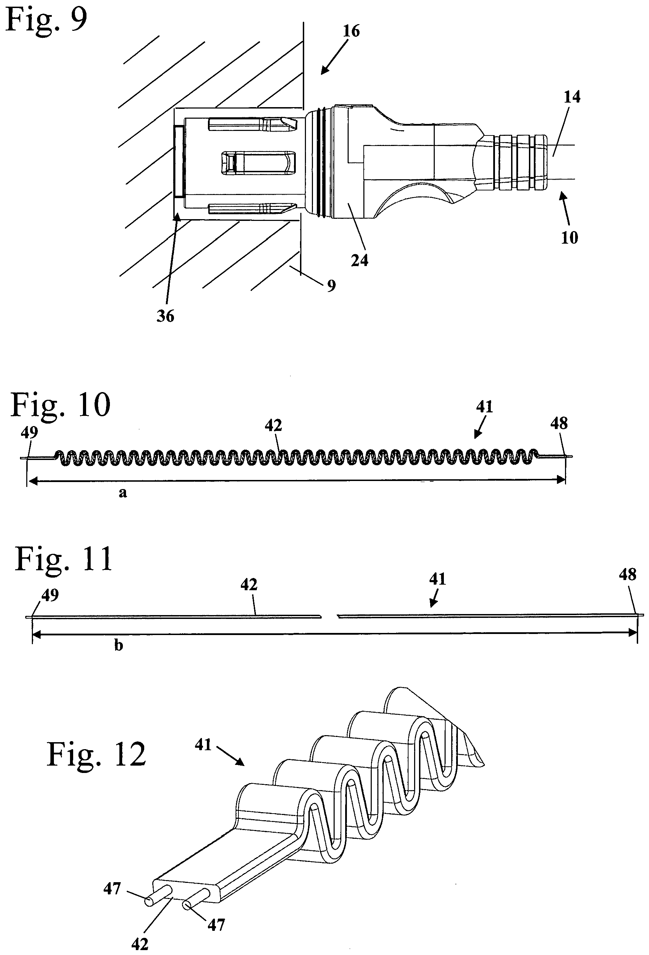

Fig. 9 zeigt schematisch die elektrische Verbindung 16. Der Akku 9 besitzt einen Gegenstecker 36 zum Stecker 24, der im Ausführungsbeispiel als Steckdose ausgebildet ist und in den der erste Stecker 24 einzustecken ist. Vorteilhaft kann die Überlastsicherung am ersten Stecker 24 integriert sein.

Die Figuren 10 bis 12 zeigen ein Ausführungsbeispiel einer Seilbaugruppe 41, bei der Adern 47 des Stromkabels 10 an einem Sicherungselement 42 integriert sind. Das Sicherungselement 42 ist aus biegeweich bzw. elastisch geformtem Kunststoffmaterial gebildet, das, wie Fig. 12 zeigt, im Ausführungsbeispiel massiv ausgebildet ist und in das die Adern 47 des Stromkabels 10 eingebettet sind. Die Adern 47 sind im Ausführungsbeispiel ohne gemeinsamen Kabelmantel in das Material des Sicherungselements 42 eingebettet. Das Sicherungselement 42 kann beispielsweise aus einem warmverformten Kunststoffmaterial bestehen, das in ungedehntem Zustand wellenförmig ist, wie Fig. 10 zeigt. In diesem Zustand besitzt das Sicherungselement 42 eine Länge a, die von einem ersten Endabschnitt 48 zu einem zweiten Endabschnitt 49 des Sicherungselements 42 gemessen ist. An den Endabschnitten 48 und 49 sind das in den Figuren 10 bis 12 nicht gezeigte Befestigungsmittel 13 und die in den Figuren 10 bis 12 nicht gezeigte Verbindungseinrichtung 17 angeordnet (Fig. 3).

Fig. 11 zeigt das Sicherungselement 42 in vollständig gedehntem Zustand. In diesem Zustand besitzt das Sicherungselement 42 eine vom ersten Endabschnitt 48 zum zweiten Endabschnitt 49 gemessene Länge b, die vorteilhaft mindestens 150%, insbesondere mindestens 160% der Länge a beträgt. Im Ausführungsbeispiel weist das Sicherungselement 42 in vollständig gedehntem Zustand keine Wellen mehr auf, sondern ist glatt ausgebildet. Das Sicherungselement 42 stellt in vollständig gedehntem Zustand eine Längenbegrenzung dar, da das Sicherungselement 42 nicht weiter gedehnt werden kann. Das Sicherungselement 42 kann auch ein Gewebeband oder dgl. sein.

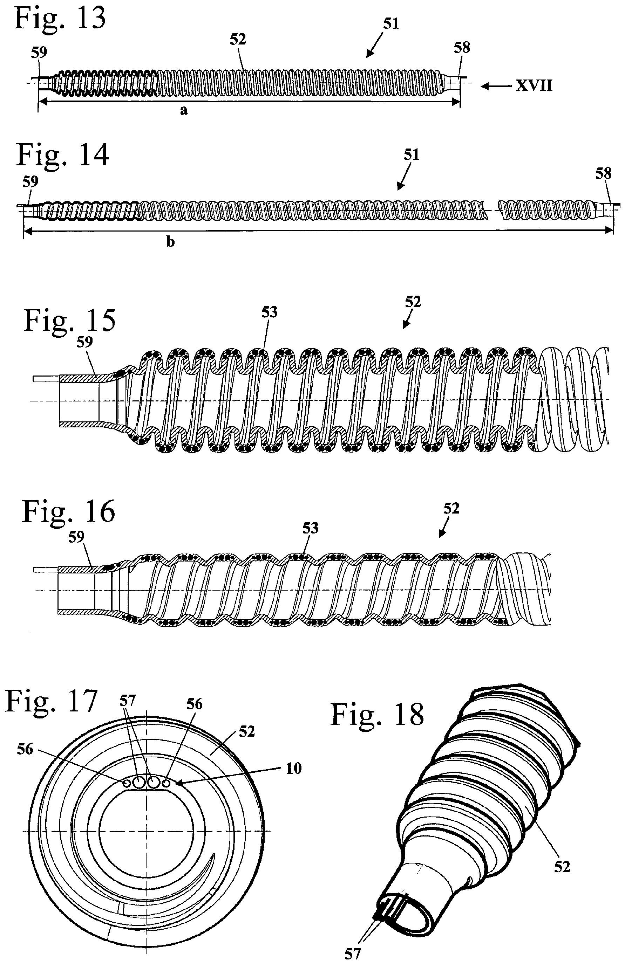

Die Figuren 13 bis 18 zeigen ein Ausführungsbeispiel einer Seilbaugruppe 51 mit einem Sicherungselement 52. Auch hier sind das Befestigungsmittel 13 und die Verbindungseinrichtung 17 nicht gezeigt. Das Sicherungselement 52 besitzt einen ersten Endabschnitt 58 und einen zweiten Endabschnitt 59, an denen das nicht gezeigte Befestigungsmittel 13 bzw. die nicht gezeigte Verbindungseinrichtung 17 angeordnet sind. In ungedehntem Zustand besitzt das Sicherungselement eine Länge a. Das Sicherungselement 52 ist rohrförmig nach Art eines Spiralschlauches ausgebildet und besitzt eine spiralförmig umlaufende Aufwölbung 53, die sowohl in ungedehntem Zustand (Fig. 15) als auch in vollständig gedehntem Zustand des Sicherungselements 52 (Fig. 16) sichtbar ist. Das Sicherungselement 52 kann so ausgebildet sein, dass es über den in den Figuren 15 und 16 gezeigten gedehnten Zustand nicht weiter gedehnt werden kann und so eine Längenbegrenzung darstellt. Es kann jedoch auch eine zusätzliche Längenbegrenzung, beispielsweise in Form eines durch das Sicherungselement 52 geführten Seils, vorgesehen sein.

Wie die Figuren 17 und 18 zeigen, ist in der Wandung des Sicherungselements 52 das Stromkabel 10 geführt, das im Ausführungsbeispiel zwei Adern 57 sowie zwei Signalleitungen 56 umfasst. Die Adern 57 und die Signalleitungen 56 sind einzeln ohne gemeinsamen Kabelmantel im Material des Sicherungselements 52 geführt. Das Sicherungselement 52 kann beispielsweise aus Kunststoff bestehen.

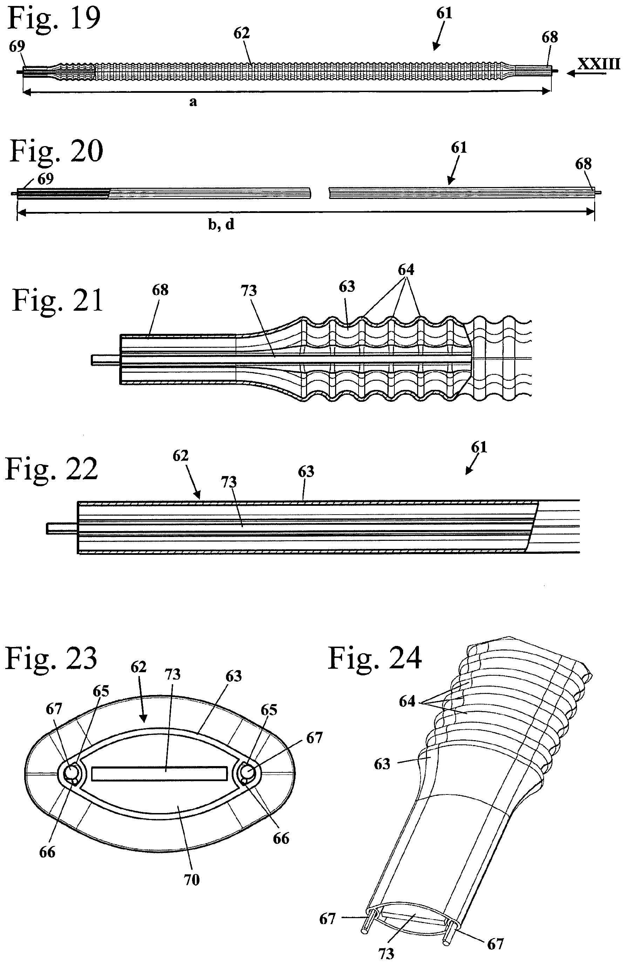

Die Figuren 19 bis 24 zeigen ein weiteres Ausführungsbeispiel einer Seilbaugruppe 61. Die Seilbaugruppe 61 besitzt einen ersten Endabschnitt 68 und einen zweiten Endabschnitt 69, an denen das Befestigungsmittel 13 und die Verbindungseinrichtung 17 festzulegen sind. In ungedehntem Zustand weist die Seilbaugruppe 61 eine Länge a auf. Die Seilbaugruppe 61 besitzt ein Sicherungselement 62, das eine schlauchförmige Hülle 63 umfasst, in der ein Federelement 73 geführt ist. Die Hülle 63 weist eine Vielzahl von Falten 64 auf und ist dadurch in ihrer Längsrichtung dehnbar. Das Federelement 73 ist, wie die Figuren 23 und 24 zeigen, flach ausgebildet und kann beispielsweise ein Gummiband oder dgl. sein. Das Federelement 73 ist aufgrund seines Materials elastisch und bewirkt eine Verkürzung der Seilbaugruppe 61, wenn die an der Seilbaugruppe 61 wirkende Kraft sich verringert. Wie die Figuren 20 und 22 zeigen, ist die Hülle 63 des Sicherungselements 62 in vollständig gedehntem Zustand glatt ausgebildet. Es kann jedoch auch vorgesehen sein, dass die Hülle 63 auch in vollständig gedehntem Zustand Falten aufweist. Das Sicherungselement 62 besitzt von seinem ersten Endabschnitt 68 bis zu seinem zweiten Endabschnitt 69 in vollständig gedehntem Zustand eine Länge b.

Wie die Figuren 23 und 24 zeigen, sind in der Hülle 63 Adern 67 und Signalleitungen 66 eines Stromkabels 10 ohne umhüllenden gemeinsamen Kabelmantel geführt. Im Ausführungsbeispiel ist die Hülle 63 flach mit näherungsweise ovalem Querschnitt bzw. abgeflachtem Kreisquerschnitt ausgebildet, wobei an den Schmalseiten Taschen 65 vorgesehen sind, in denen jeweils eine Signalleitung 66 und eine Ader 67 des Stromkabels 10 geführt sind. In dem dazwischen liegenden, von den Taschen 65 getrennten Raum 70 ist das Federelement 63 geführt. Die Taschen 65 können jedoch auch entfallen, und die Adern 67 und die Signalleitungen 66 können gemeinsam mit dem Federelement 63 in dem Raum 70 geführt sein. Die Hülle 63 des Sicherungselements 62 bildet eine Längenbegrenzung für die Seilbaugruppe 61. Die Hülle 63 kann beispielsweise ein Textilschlauchband sein. Das Stromkabel 10 mit den Adern 67 und den Signalleitungen 66 besitzt eine in Fig. 20 gezeigte Länge d, die vom ersten Endabschnitt 68 bis zum zweiten Endabschnitt 69 der Länge b des Sicherungselements 62 und der Seilbaugruppe 61 entspricht. Dadurch wird das Stromkabel 10 bei maximal gespanntem Sicherungselement 62 nicht in seiner Länge gedehnt. Die Länge d kann auch größer als die Länge b sein.

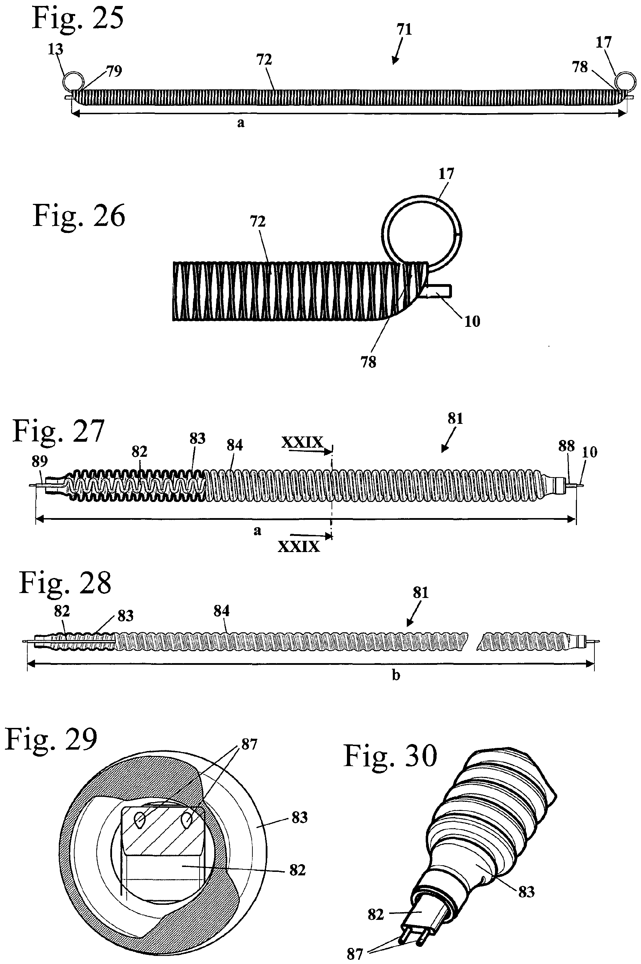

Die Figuren 25 und 26 zeigen ein Ausführungsbeispiel einer Seilbaugruppe 71, die ein Sicherungselement 72 umfasst. Das Sicherungselement 72 ist als Gewebeschlauch ausgebildet, an dessen erstem Endabschnitt 78 eine Verbindungseinrichtung 17 und an dessen zweitem Endabschnitt 79 ein Befestigungsmittel 13 fixiert sind. Durch das Sicherungselement 72 verläuft das Stromkabel 10. Die Längenbegrenzung wird durch das Kupfer des Stromkabels 10 gebildet. Es kann jedoch auch vorgesehen sein, dass das Sicherungselement 72 aufgrund seiner Webstruktur eine Längenbegrenzung bildet. In vollständig gedehntem Zustand kann sich das Sicherungselement 72 um den Außenumfang des Stromkabels 10 schmiegen. Es kann jedoch auch vorgesehen sein, dass zwischen dem Stromkabel 10 und dem Sicherungselement 72 ein Abstand besteht. Das Sicherungselement 72 ist elastisch ausgebildet und geht, wenn keine Kraft mehr auf das Sicherungselement 72 einwirkt, im Wesentlichen in seine Ausgangslänge zurück.

Die Figuren 27 bis 30 zeigen ein Ausführungsbeispiel einer Seilbaugruppe 81, die eine Hülle 83 umfasst, durch die ein Sicherungselement 82 verläuft. Die Hülle 83 ist rohrförmig ausgebildet und weist eine spiralförmige Aufwölbung 84 auf, die eine Längendehnung der Hülle 83 zulässt. Die Hülle 83 kann beispielsweise aus Kunststoff bestehen. Die Elastizität kann sich aufgrund der Aufwölbung 84 oder durch die Elastizität des Materials ergeben. Das Sicherungselement 82 ist in dem in Fig. 27 gezeigten, nicht belasteten Zustand wellenförmig ausgebildet und kann beispielsweise aus warmverformtem Kunststoff bestehen. Das Sicherungselement 82 entspricht vorteilhaft dem Sicherungselement 42 (Fig. 10). Im Sicherungselement 82 sind zwei Adern 87 des Stromkabels 10 eingebettet, die vom Material des Sicherungselements 82 vollständig umhüllt sind. In dem in Fig. 28 gezeigten gestreckten Zustand der Seilbaugruppe 81 ist das Sicherungselement 82 glatt ausgebildet. Das Sicherungselement 82 kann eine Längenbegrenzung der Seilbaugruppe 81 bilden. Es kann jedoch auch vorgesehen sein, dass die Längenbegrenzung durch die Hülle 83 gebildet ist. An einem ersten Endabschnitt 88 der Seilbaugruppe 81 sind eine Verbindungseinrichtung 17 und am zweiten Endabschnitt 89 ein Befestigungsmittel 13 festzulegen.

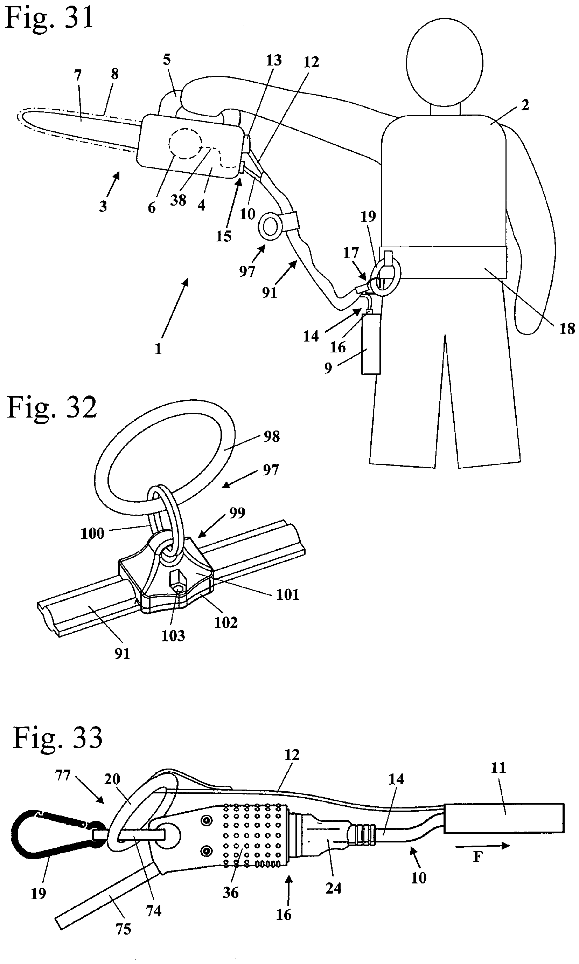

Die Figuren 31 und 32 zeigen ein Ausführungsbeispiel einer Motorsägenanordnung 1. Die Motorsägenanordnung 1 umfasst eine Seilbaugruppe 91, die die Motorsäge 3 mit dem Bediener 2 verbindet. Der Aufbau der Seilbaugruppe 91 kann dabei dem Aufbau einer der in den vorangegangenen Ausführungsbeispielen gezeigten Seilbaugruppen 11, 41, 51, 61, 71, 81 entsprechen. An der Seilbaugruppe, 91 ist eine Verbindungseinrichtung 97 lösbar festgelegt. Die Verbindungseinrichtung 97 kann von der Seilbaugruppe 91 mindestens teilweise gelöst und in unterschiedlichen Positionen an der Seilbaugruppe 91 fixiert werden. Die Verbindungseinrichtung 97 ist im Ausführungsbeispiel zusätzlich zur Verbindungseinrichtung 17 vorgesehen. Es kann jedoch auch vorgesehen sein, dass nur eine in unterschiedlichen Positionen an der Seilbaugruppe 91 festlegbare Verbindungseinrichtung 97 vorgesehen ist und keine fest an der Seilbaugruppe fixierte Verbindungseinrichtung 17.

Fig. 32 zeigt die Gestaltung der Verbindungseinrichtung 97 im Einzelnen. Die Verbindungseinrichtung 97 umfasst eine Klemmeinrichtung 99, die an der Seilbaugruppe 91 lösbar fixiert ist. Die Klemmeinrichtung 99 umfasst im Ausführungsbeispiel eine erste Klemmschale 101 und eine zweite Klemmschale 102, die über Befestigungsmittel 103 miteinander verbunden sind. Die Befestigungsmittel 103 können beispielsweise Schrauben oder eine Schnellspannvorrichtung sein. Zum Verschieben der Klemmeinrichtung 99 gegenüber der Seilbaugruppe 91 wird mindestens ein Befestigungsmittel 103 gelöst, so dass die Klemmschalen 101 und 102 gegenüber der Seilbaugruppe 91 verschiebbar sind. Sobald sich die Klemmeinrichtung 99 in der gewünschten Position befindet, wird das mindestens eine Befestigungsmittel 103 wieder fixiert. Wie Fig. 32 zeigt, ist im Ausführungsbeispiel an der ersten Klemmschale 101 ein Überlastring 100 gehalten, in den eine Befestigungsöse 98 eingehakt ist. Über die Befestigungsöse 98 kann die Verbindungseinrichtung 97 beispielsweise an einem Karabinerhaken 19 des Traggürtels 18 festgelegt sein.

Es kann auch vorgesehen sein, dass die Verbindungseinrichtung 97 keinen Überlastring 100 aufweist. In diesem Fall ist die Verbindungseinrichtung 97 lediglich zum Transport der Motorsäge 3 und nicht zur Verwendung beim Betrieb der Motorsäge 3 vorgesehen.

Fig. 33 zeigt ein Ausführungsbeispiel einer Verbindungseinrichtung 77 zur Verbindung einer Seilbaugruppe 11 mit einem Benutzer. Gleiche Bezugszeichen kennzeichnen dabei in allen Figuren einander entsprechende Elemente. Die Verbindungseinrichtung 77 umfasst einen mit dem Sicherungselement 12 verbundenen Überlastring 20. Der Überlastring 20 ist in einem Ring 74 gehalten, an dem auch der Gegenstecker 36 begrenzt beweglich gehalten ist. Der Ring 74 ist am Karabinerhaken 19 des Benutzers 2 eingehakt. Die elektrische Verbindung 16 ist als Steckverbindung ausgebildet und durch den ersten Stecker 24 gebildet, der in den Gegenstecker 36 eingesteckt ist. Durch die begrenzt bewegliche Fixierung des Gegensteckers 36 am Ring 74 kann sich der Gegenstecker 36 in Richtung einer am Stromkabel 10 und der Seilbaugruppe 11 wirkenden Zugkraft F ausrichten. Durch die Anordnung des Überlastrings 20 an der elektrischen Verbindung 16 ergibt sich ein einfacher, kompakter Aufbau. Der Überlastring 20 ist auch hier so ausgelegt, dass der Überlastring 20 bei Überschreiten einer maximalen Zugkraft F aufgebogen und die mechanische Verbindung zwischen Karabinerhaken 19 und Sicherungselement 12 gelöst wird. Die Auszugskraft der elektrischen Verbindung 16 ist kleiner als die maximal wirkende Zugkraft, so dass sich auch die elektrische Verbindung 16 unmittelbar nach Lösen der Verbindungseinrichtung 77 löst. Der Gegenstecker 36 ist über ein Anschlusskabel 75 mit dem Akku 9 verbunden. Dadurch ist eine begrenzt bewegliche Anordnung des Gegensteckers 36 auf einfache Weise möglich.

## Patentansprüche

1. Motorsägenanordnung mit einer Motorsäge (3), die ein Gehäuse (4) besitzt, an dem eine Führungsschiene (7) festgelegt ist, mit einem elektrischen Antriebsmotor (6), der eine an der Führungsschiene (7) umlaufend angeordnete Sägekette (8) antreibt, wobei der Antriebsmotor (6) von mindestens einem Akku (9) mit Energie versorgt wird, wobei der Akku (9) außerhalb des Gehäuses (4) der Motorsäge (3) angeordnet und über ein Stromkabel (10) mit dem Antriebsmotor (6) verbunden ist, wobei das Stromkabel (10) ein erstes, an einer elektrischen Verbindung (16) mit dem Akku (9) verbundenes Ende (14) und ein zweites, an der Motorsäge (3) gehaltenes Ende (15) besitzt,
**dadurch gekennzeichnet, dass** die Motorsäge (3) ein elastisches Sicherungselement (12, 42, 52, 62, 72, 82) besitzt, wobei das Sicherungselement (12, 42, 52, 62, 72, 82) über mindestens ein Befestigungsmittel (13) am Gehäuse (4) der Motorsäge (3) festgelegt ist, und wobei mindestens eine Verbindungseinrichtung (17, 77, 97) zur Verbindung des Sicherungselementes (12, 42, 52, 62, 72, 82) mit einem Benutzer (2) vorgesehen ist, wobei die Verbindungseinrichtung (17, 77, 97) eine Überlastsicherung besitzt, die die mechanische Verbindung des Sicherungselements (12, 42, 52, 62, 72, 82) mit dem Benutzer (2) bei Überschreiten einer am Sicherungselement (12, 42, 52, 62, 72, 82) wirkenden maximalen Zugkraft löst, wobei das Sicherungselement (12, 42, 52, 62, 72, 82) mit dem Stromkabel (10) eine Seilbaugruppe (11, 41, 51, 61, 71, 81, 91) bildet, und wobei die Auszugskraft zum Lösen der elektrischen Verbindung (16) kleiner als die maximale Zugkraft ist.

2. Motorsägenanordnung nach Anspruch 1,
**dadurch gekennzeichnet, dass** die Auszugskraft der elektrischen Verbindung (16) höchstens die Hälfte der maximalen Zugkraft beträgt.

3. Motorsägenanordnung nach Anspruch 1 oder 2,
**dadurch gekennzeichnet, dass** die Seilbaugruppe (11, 41, 51, 61, 71, 81, 91) Mittel zur Verbindung des Stromkabels (10) mit dem Sicherungselement (12, 42, 52, 62, 72, 82) besitzt.

4. Motorsägenanordnung nach Anspruch 3,
**dadurch gekennzeichnet, dass** das Stromkabel (10) benachbart zum Befestigungsmittel (13) am Sicherungselement (12, 42, 52, 62) befestigt ist.

5. Motorsägenanordnung nach Anspruch 3 oder 4,
**dadurch gekennzeichnet, dass** das Stromkabel (10) benachbart zur Verbindungseinrichtung (17, 77) am Sicherungselement (12, 42, 52, 62) befestigt ist.

6. Motorsägenanordnung nach einem der Ansprüche 1 bis 4,
**dadurch gekennzeichnet, dass** die Verbindungseinrichtung (97) in mindestens zwei Positionen an der Seilbaugruppe (91) festlegbar ist.

7. Motorsägenanordnung nach einem der Ansprüche 1 bis 6,
**dadurch gekennzeichnet, dass** das Stromkabel (10) über mindestens 50% der Länge (a) des Sicherungselements (12, 42, 52, 62, 72, 82) zwischen dem Befestigungsmittel (13) und der Verbindungseinrichtung (17, 77, 97) mit dem Sicherungselement (12, 42, 52, 62, 72, 82) zumindest lose verbunden ist, so dass der Abstand (c) zwischen Sicherungselement (12, 42, 52, 62, 72, 82) und Stromkabel (10) in jedem Bereich kleiner als 15 cm ist.

8. Motorsägenanordnung nach Anspruch 7,
**dadurch gekennzeichnet, dass** das Stromkabel (10) in dem Bereich, in dem das Stromkabel (10) mit dem Sicherungselement (12) verbunden ist, um das Sicherungselement (12) gewunden ist.

9. Motorsägenanordnung nach Anspruch 7,
**dadurch gekennzeichnet, dass** das Stromkabel (10) in dem Bereich, in dem es mit dem Sicherungselement (42, 52, 72, 82) verbunden ist, innerhalb des Sicherungselements (42, 52, 72, 82) geführt ist.

10. Motorsägenanordnung nach einem der Ansprüche 1 bis 9,
**dadurch gekennzeichnet, dass** die Seilbaugruppe (11, 61, 81, 91) eine Hülle (26, 63, 84) umfasst, in der das Sicherungselement (12, 62, 82) und das Stromkabel (10) über mindestens einen Teilbereich ihrer Länge geführt sind.

11. Motorsägenanordnung nach Anspruch 10,
**dadurch gekennzeichnet, dass** die Hülle (26, 63, 82) sich vom Befestigungsmittel (13) bis zur Verbindungseinrichtung (17, 77, 97) erstreckt.

12. Motorsägenanordnung nach einem der Ansprüche 1 bis 11,
**dadurch gekennzeichnet, dass** die Seilbaugruppe (11, 41, 51, 61, 71, 81, 91) eine Längenbegrenzung (33) zur Begrenzung der maximalen gedehnten Länge (b) des Sicherungselements (12, 42, 52, 62, 72, 82) aufweist.

13. Motorsägenanordnung nach Anspruch 12,
**dadurch gekennzeichnet, dass** die maximale gedehnte Länge (b) des Sicherungselements (12, 42, 52, 62, 72, 82) zwischen dem Befestigungsmittel (13) und der Verbindungseinrichtung (17, 77, 97) mindestens 150% der unbelasteten Länge (a) des Sicherungselements (12, 42, 52, 62, 72, 82) zwischen dem Befestigungsmittel (13) und der Verbindungseinrichtung (17, 77, 97) beträgt.

14. Motorsägenanordnung nach Anspruch 12 oder 13,
**dadurch gekennzeichnet, dass** die Länge (d) des Stromkabels (10) mindestens der maximal gedehnten Länge (b) des Sicherungselements (12, 42, 52, 62, 72, 82) entspricht.

15. Motorsägenanordnung nach einem der Ansprüche 1 bis 14,
**dadurch gekennzeichnet, dass** das erste Ende (14) des Stromkabels (10) einen Stecker (24) einer Steckverbindung trägt, der mit einem Gegenstecker (36) des Akkus (9) elektrisch verbunden ist.

16. Motorsägenanordnung nach Anspruch 15,
**dadurch gekennzeichnet, dass** der Gegenstecker (36) begrenzt beweglich gehalten ist und sich in Richtung der am Stromkabel (10) wirkenden Zugkraft (F) ausrichten kann.

17. Motorsägenanordnung nach Anspruch 15 oder 16,
**dadurch gekennzeichnet, dass** der Stecker (24) des Stromkabels (10) fest mit der Längenbegrenzung (33) des Sicherungselements (12) verbunden ist.

18. Motorsägenanordnung nach einem der Ansprüche 15 bis 17,
**dadurch gekennzeichnet, dass** die Überlastsicherung an der Steckverbindung angeordnet ist.

19. Seilbaugruppe für eine Motorsäge, wobei die Seilbaugruppe (11, 41, 51, 61, 71, 81, 91) ein elastisches Sicherungselement (12, 42, 52, 62, 72, 82) und ein Stromkabel (10) umfasst, wobei die Seilbaugruppe (11, 41, 51, 61, 71, 81, 91) mindestens ein Befestigungsmittel (13) besitzt, mit dem das Sicherungselement (12, 42, 52, 62, 72, 82) am Gehäuse (4) einer Motorsäge (3) festlegbar ist, und wobei die Seilbaugruppe (11, 41, 51, 61, 71, 81, 91) mindestens eine Verbindungseinrichtung (17, 77, 97) zur Verbindung mit einem Benutzer (2) aufweist, wobei die Verbindungseinrichtung (17, 77, 97) eine Überlastsicherung besitzt, die die mechanische Verbindung des Sicherungselements (12, 42, 52, 62, 72, 82) mit dem Benutzer (2) bei Überschreiten einer am Sicherungselement (12, 42, 52, 62, 72, 82) wirkenden maximalen Zugkraft löst, wobei das Stromkabel (10) einen Stecker (24) einer elektrischen Verbindung (16) trägt, wobei die Auszugskraft der elektrischen Verbindung (16) kleiner als die maximale Zugkraft ist.

## Claims

1. Motorised saw assembly with a motorised saw (3) comprising a housing (4), on which a guide rail (7) is located, and an electric drive motor (6) driving a saw chain (8) arranged to revolve along the guide rail (7), wherein the drive motor (6) is supplied with energy by at least one battery (9), wherein the battery (9) is located outside the housing (4) of the motorised saw (3) and connected to the drive motor (6) via a power cable (10), the power cable (10) having a first end (14) connected to the battery (9) at an electric connection (16) and a second end (15) held on the motorised saw (3),
**characterised in that** the motorised saw (3) has an elastic securing element (12, 42, 52, 62, 72, 82), wherein the securing element (12, 42, 52, 62, 72, 82) is located on the housing (4) of the motorised saw (3) via at least one fastening means (13), and wherein at least one connecting device (17, 77, 97) is provided to connect the securing element (12, 42, 52, 62, 72, 82) to a user (2), wherein the connecting device (17, 77, 97) has an overload protection which releases the mechanical connection between the securing element (12, 42, 52, 62, 72, 82) and the user (2) if a maximum tensile force acting on the securing element (12, 42, 52, 62, 72, 82) is exceeded, wherein the securing element (12, 42, 52, 62, 72, 82) forms a cable module (11, 41, 51, 61, 71, 81, 91) with the power cable (10), and wherein the pull-out force for releasing the electric connection (16) is lower than the maximum tensile force.

2. Motorised saw assembly according to claim 1,
**characterised in that** the pull-out force of the electric connection (16) is at most half of the maximum tensile force.

3. Motorised saw assembly according to claim 1 or 2,
**characterised in that** the cable module (11, 41, 51, 61, 71, 81, 91) has means for connecting the power cable (10) to the securing element (12, 42, 52, 62, 72, 82).

4. Motorised saw assembly according to claim 3,
**characterised in that** the power cable (10) is secured to the securing element (12, 42, 52, 62) adjacent to the fastening means (13).

5. Motorised saw assembly according to claim 3 or 4,
**characterised in that** the power cable (10) is secured to the securing element (12, 42, 52, 62) adjacent to the connecting device (17, 77).

6. Motorised saw assembly according to any of claims 1 to 4,
**characterised in that** the connecting device (97) can be located on the cable module (91) in at least two positions.

7. Motorised saw assembly according to any of claims 1 to 6,
**characterised in that** the power cable (10) is at least loosely connected to the securing element (12, 42, 52, 62, 72, 82) along at least 50% of the length (a) of the securing element (12, 42, 52, 62, 72, 82) between the fastening means (13) and the connecting device (17, 77, 97), so that the distance (c) between the securing element (12, 42, 52, 62, 72, 82) and the power cable (10) is in every region less than 15 cm.

8. Motorised saw assembly according to claim 7,
**characterised in that** the power cable (10) is wound around the securing element (12) in the region where the power cable (10) is connected to the securing element (12).

9. Motorised saw assembly according to claim 7,
**characterised in that** the power cable (10) is routed within the securing element (42, 52, 72, 82) in the region where it is connected to the securing element (42, 52, 72, 82).

10. Motorised saw assembly according to any of claims 1 to 9,
**characterised in that** the cable module (11, 61, 81, 91) comprises a sleeve (26, 63, 84), in which the securing element (12, 62, 82) and the power cable (10) are routed along at least a part of their length.

11. Motorised saw assembly according to claim 10,
**characterised in that** the sleeve (26, 63, 84) extends from the fastening means (13) to the connecting device (17, 77, 97).

12. Motorised saw assembly according to any of claims 1 to 11,
**characterised in that** the cable module (11, 41, 51, 61, 71, 81, 91) comprises a length restriction device (33) for limiting the maximum stretched length (b) of the securing element (12, 42, 52, 62, 72, 82).

13. Motorised saw assembly according to claim 12,
**characterised in that** the maximum stretched length (b) of the securing element (12, 42, 52, 62, 72, 82) between the fastening means (13) and the connecting device (17, 77, 97) is at least 150% of the unloaded length (a) of the securing element (12, 42, 52, 62, 72, 82) between the fastening means (13) and the connecting device (17, 77, 97).

14. Motorised saw assembly according to claim 12 or 13,
**characterised in that** the length (d) of the power cable (10) corresponds at least to the maximum stretched length (b) of the securing element (12, 42, 52, 62, 72, 82).

15. Motorised saw assembly according to any of claims 1 to 14,
**characterised in that** the first end (14) of the power cable (10) supports a plug (24) of a plug connection, which is electrically connected to a mating plug (36) of the battery (9).

16. Motorised saw assembly according to claim 15,
**characterised in that** the mating plug (36) is held with limited mobility and can orient itself in the direction of the tensile force (F) acting on the power cable (10).

17. Motorised saw assembly according to claim 15 or 16,
**characterised in that** the plug (24) of the power cable (10) is permanently connected to the length restriction device (33) of the securing element (12).

18. Motorised saw assembly according to any of claims 15 to 17,
**characterised in that** the overload protection is located on the plug connection.

19. Cable module for a motorised saw, wherein the cable module (11, 41, 51, 61, 71, 81, 91) comprises an elastic securing element (12, 42, 52, 62, 72, 82) and a power cable (10), wherein the cable module (11, 41, 51, 61, 71, 81, 91) has at least one fastening means (13), with which the securing element (12, 42, 52, 62, 72, 82) can be located on the housing (4) of a motorised saw (3), and wherein the cable module (11, 41, 51, 61, 71, 81, 91) comprises at least one connecting device (17, 77, 97) for connection to a user (2), wherein the connecting device (17, 77, 97) has an overload protection which releases the mechanical connection between the securing element (12, 42, 52, 62, 72, 82) and the user (2) if a maximum tensile force acting on the securing element (12, 42, 52, 62, 72, 82) is exceeded, wherein the power cable (10) supports a plug (24) of an electric connection (16), wherein the pull-out force of the electric connection (16) is lower than the maximum tensile force.

## Revendications

1. Dispositif de tronçonneuse avec une tronçonneuse (3) qui comporte un boîtier (4) auquel est fixé un rail de guidage (7), avec un moteur d'entraînement électrique (6) qui entraîne une scie à chaîne (8) disposée pour circuler sur le rail de guiage (7), le moteur d'entraînement (6) étant alimenté en énergie par au moins une batterie (9), la batterie (9) étant disposée à l'extérieur du boîtier (4) de la tronçonneuse (3) et étant reliée au moteur d'entraînement (6) par un câble électrique (10), le câble électrique (10) comportant une première extrémité (14) qui est reliée à la batterie (9) au niveau d'une liaison électrique (16), et une seconde extrémité (15) qui est retenue sur la tronçonneuse (3),
**caractérisé en ce que** la tronçonneuse (3) comporte un élément de sécurité élastique (12, 42, 52, 62, 72, 82), l'élément de sécurité (12, 42, 52, 62, 72, 82) étant fixé au boîtier (4) de la tronçonneuse (3) par au moins un moyen de fixation (13), et au moins un dispositif de liaison (17, 77, 97) étant prévu pour relier l'élément de sécurité (12, 42, 52, 62, 72, 82) à un utilisateur (2), le dispositif de liaison (17, 77, 97) comportant une protection contre une surcharge qui détache la liaison mécanique entre l'élément de sécurité (12, 42, 52, 62, 72, 82) et l'utilisateur (2) en cas de dépassement d'une force de traction maximale agissant sur l'élément de sécurité (12, 42, 52, 62, 72, 82), l'élément de sécurité (12, 42, 52, 62, 72, 82) formant avec le câble électrique (10) un composant de câble (11, 41, 51, 61, 71, 81, 91), et la force d'arrachement pour détacher la liaison électrique (16) étant inférieure à la force de traction maximale.

2. Dispositif de tronçonneuse selon la revendication 1,
**caractérisé en ce que** la force d'arrachement de la liaison électrique (16) supporte au maximum la moitié de la force de traction maximale.

3. Dispositif de tronçonneuse selon la revendication 1 ou 2,
**caractérisé en ce que** le composant de câble (11, 41, 51, 61, 71, 81, 91) comporte des moyens pour relier le câble électrique (10) à l'élément de sécurité (12, 42, 52, 62, 72, 82).

4. Dispositif de tronçonneuse selon la revendication 3,
**caractérisé en ce que** le câble électrique (10) est fixé à l'élément de sécurité (12, 42, 52, 62) près du moyen de fixation (13).

5. Dispositif de tronçonneuse selon la revendication 3 ou 4,
**caractérisé en ce que** le câble électrique (10) est fixé à l'élément de sécurité (12, 42, 52, 62) près de l'élément de liaison (17, 77).

6. Dispositif de tronçonneuse selon l'une des revendications 1 à 4, **caractérisé en ce que** le dispositif de liaison (97) est apte à être fixé dans au moins deux positions au composant de câble (91).

7. Dispositif de tronçonneuse selon l'une des revendications 1 à 6,
**caractérisé en ce que** le câble électrique (10), sur au moins 50% de la longueur (a) de l'élément de sécurité (12, 42, 52, 62, 72, 82) entre l'élément de fixation (13) et le dispositif de liaison (17, 77, 97), est relié au moins de manière lâche audit élément de sécurité (12, 42, 52, 62, 72, 82), de sorte que l'écartement (c) entre l'élément de sécurité (12, 42, 52, 62, 72, 82) et le câble électrique (10) dans n'importe quelle zone est inférieur à 15 cm.

8. Dispositif de tronçonneuse selon la revendication 7,
**caractérisé en ce que** le câble électrique (10), dans la zone où il est relié à l'élément de sécurité (12), est enroulé autour de celui-ci.

9. Dispositif de tronçonneuse selon la revendication 7,
**caractérisé en ce que** le câble électrique (10), dans la zone où il est relié à l'élément de sécurité (42, 52, 72, 82), passe à l'intérieur de celui-ci.

10. Dispositif de tronçonneuse selon l'une des revendications 1 à 9,
**caractérisé en ce que** le composant de câble (11, 61, 81, 91) comprend une gaine (26, 63, 84) dans laquelle l'élément de sécurité (12, 62, 82) et le câble électrique (10) passent sur une partie au moins de leur longueur.

11. Dispositif de tronçonneuse selon la revendication 10,
**caractérisé en ce que** la gaine (26, 63, 82) s'étend de l'élément de fixation (13) jusqu'au dispositif de liaison (17, 77, 97).

12. Dispositif de tronçonneuse selon l'une des revendications 1 à 11,
**caractérisé en ce que** le composant de câble (11, 41, 51, 61, 71, 81, 91) présente une limitation longitudinale (33) pour limiter la longueur allongée maximale (b) de l'élément de sécurité (12, 42, 52, 62, 72, 82).

13. Dispositif de tronçonneuse selon la revendication 12,
**caractérisé en ce que** la longueur allongée maximale (b) de l'élément de sécurité (12, 42, 52, 62, 72, 82), entre l'élément de fixation (13) et le dispositif de liaison (17, 77, 97), représente au moins 150% de la longueur non contrainte (a) dudit élément de sécurité (12, 42, 52, 62, 72, 82) entre le moyen de fixation (13) et le dispositif de liaison (17, 77, 97).

14. Dispositif de tronçonneuse selon la revendication 12 ou 13,
**caractérisé en ce que** la longueur (d) du câble électrique (10) correspond au moins à la longueur allongée au maximum (b) de l'élément de sécurité (12, 42, 52, 62, 72, 82).

15. Dispositif de tronçonneuse selon l'une des revendications 1 à 14,
**caractérisé en ce que** la première extrémité (14) du câble électrique (10) porte un connecteur (24) d'une connexion enfichable, qui est relié électriquement à un connecteur opposé (36) de la batterie (9).

16. Dispositif de tronçonneuse selon la revendication 15,
**caractérisé en ce que** le connecteur opposé (36) est retenu avec une mobilité limitée et peut s'orienter dans le sens de la force de traction (F) agissant sur le câble électrique (10).

17. Dispositif de tronçonneuse selon la revendication 15 ou 16,
**caractérisé en ce que** le connecteur (24) du câble électrique (10) est relié solidement à la limitation longitudinale (33) de l'élément de sécurité (12).

18. Dispositif de tronçonneuse selon l'une des revendications 15 à 17,
**caractérisé en ce que** la protection contre une surcharge est disposée sur la connexion enfichable.

19. Composant de câble pour une tronçonneuse, le composant de câble (11, 41, 51, 61, 71, 81, 91) comprenant un élément de sécurité élastique (12, 42, 52, 62, 72, 82) et un câble électrique (10), ledit composant de câble (11, 41, 51, 61, 71, 81, 91) comportant au moins un moyen de fixation (13) avec lequel l'élément de sécurité (12, 42, 52, 62, 72, 82) est apte à être fixé au boîtier (4) d'une tronçonneuse (3), et le composant de câble (11, 41, 51, 61, 71, 81, 91) comportant au moins un dispositif de liaison (17, 77, 97) à relier à un utilisateur (2), le dispositif de liaison (17, 77, 97) comportant une protection contre une surcharge qui détache la liaison mécanique entre l'élément de sécurité (12, 42, 52, 62, 72, 82) et l'utilisateur (2) en cas de dépassement d'une force de traction maximale agissant sur l'élément de sécurité (12, 42, 52, 62, 72, 82), le câble électrique (10) portant un connecteur (24) d'une liaison électrique (16), la force d'arrachement pour détacher ladite liaison électrique (16) étant inférieure à la force de traction maximale.
